## Europäisches Patentamt
## European Patent Office
## Office européen des brevets

(11) Veröffentlichungsnummer: **0 453 925 A1**

## (12) EUROPÄISCHE PATENTANMELDUNG

(21) Anmeldenummer: **91106036.6**

(22) Anmeldetag: **15.04.91**

(51) Int. Cl.5: **A22C 13/00**

(30) Priorität: **24.04.90 DE 4012953**

(43) Veröffentlichungstag der Anmeldung:
**30.10.91 Patentblatt 91/44**

(84) Benannte Vertragsstaaten:
**AT BE CH DE DK ES FR GB IT LI NL SE**

(71) Anmelder: **HOECHST AKTIENGESELLSCHAFT**
**Postfach 80 03 20**
**W-6230 Frankfurt am Main 80(DE)**

(72) Erfinder: **Saal, Marliese**
**Buchenweg 7**
**W-6501 Heidesheim(DE)**
Erfinder: **Harreus, Albrecht, Dr.**
**Philipp Kremer Strasse 20**
**W-6233 Kelkheim/Taunus(DE)**
Erfinder: **Gutte, Richard**
**Heimchenweg 52**
**W-6230 Frankfurt/Höchst(DE)**

(54) **Kunststoffolie mit Faserverstärkung und daraus hergestellte schlauchförmige Hüllen.**

(57) Die Kunststoffolie enthält eine Verstärkung aus einem Faserstoff, der zumindest auf einer seiner beiden Oberflächen eine Imprägnierung und gegebenenfalls einen Überzug aus einem Kunststoff aufweist. Der Kunststoff besteht im wesentlichen aus einem Mischpolymeren mit mindestens zwei verschiedenen monomeren Einheiten, die aus der Gruppe der Vinylester, Maleinsäureester, Fumarsäureester, Acrylsäureester, Methacrylsäureester, linearen alpha-Olefinen mit 2 bis 8 C-Atomen und Styrol ausgewählt sind. Die Folie ist geeignet zur Herstellung von Schläuchen, die eine längsaxiale Siegelnaht aufweisen. Die Schläuche werden vor allem als künstliche Wursthüllen verwendet.

EP 0 453 925 A1

Die Erfindung bezieht sich auf eine Kunststoffolie mit einer Verstärkung aus einem Faserstoff und ihre Verwendung als zylinderförmige Schlauchhülle.

Es sind bereits faserverstärkte Folien aus Cellulose bekannt, die bahnförmig hergestellt werden. Zur Herstellung von schlauchförmigen Hüllen werden die bahnförmigen Folien gebogen und die überlappenden längsaxialen Ränder mit einer Klebstoffschicht miteinander verbunden (EP-A-0 139 112, = US-A-4,546,023). Es sind auch Hüllen zum Verpacken von Lebensmitteln bekannt geworden, die aus einem mit Acrylharz beschichtetem textilen Flächengebilde bestehen (DE-A-37 04 563).

Gegenüber diesem Stand der Technik besteht die Aufgabe der Erfindung darin, eine Folie zur Herstellung von geklebten Schlauchhüllen anzugeben, die sich ohne große Probleme hinsichtlich der Abluft und des Abwassers produzieren läßt. Sie soll sich ferner zu rauch- und wasserdampfdurchlässigen Schläuchen verarbeiten lassen, die als künstliche Wursthülle, insbesondere für Rohwürste, besonders geeignet sind.

Diese Aufgabe wird gelöst durch eine Kunststoffolie mit einer Verstärkung aus einem Faserstoff, die dadurch gekennzeichnet ist, daß der flächenförmige Faserstoff zumindest auf einer seiner beiden Oberflächen eine Imprägnierung und gegebenenfalls einen Überzug aus einem Kunststoff aufweist, der im wesentlichen aus einem Mischpolymeren mit mindestens zwei verschiedenen monomeren Einheiten besteht, welche ausgewählt sind aus der Gruppe der Vinylester, Maleinsäureester, Fumarsäureester, Acrylsäureester, Methacrylsäureester, linearen alpha-Olefinen mit 2 bis 8 C-Atomen und Styrol. Diese Aufgabe wird ferner gelöst durch die speziellen Ausbildungen der Folie, deren Merkmale in den abhängigen Ansprüchen angegeben sind, durch die Verwendung der Folie als schlauchförmige Verpackungshülle nach Anspruch 8 und durch das Verfahren zu ihrer Herstellung nach Anspruch 9.

Die Folie läßt sich überraschenderweise - trotz der Kunststoffschicht auf dem Faserstoff - wie eine faserverstärkte Folie aus Cellulose zu rauch- und wasserdampfdurchlässigen Schläuchen verarbeiten. Ferner läßt sich die Folie vorteilhafterweise mit einem kontinuierlichen Verfahren herstellen.

Der flächenförmige Faserstoff ist beispielsweise ein Faserpapier, wie es zur Herstellung von faserverstärkten Cellulosehüllen, sogenannter Faserdarm, üblich ist. Es besteht vorzugsweise aus Flachs- oder Hanffasern und zeigt gewöhnlich ein Flächengewicht von 15 bis 30 g/m$^2$. In einer anderen Ausführungsform ist der Faserstoff ein Vliesstoff, welcher aus Naturfasern, vorzugsweise aber aus Kunststoffasern besteht. Geeignete Kunststoffasern bestehen beispielsweise aus Polyester wie Polyethylenterephthalat, Polyolefin wie Polypropylen, Polyacrylnitril oder Polyamid wie PA 6 oder PA 66. Auch Mischfasern aus Kunststoff, insbesondere aus wenigstens zwei der genannten Kunststoffe, sind als Vliesstoffmaterial geeignet. Der Vliesstoff hat gewöhnlich ein Flächengewicht von 10 bis 50, insbesondere 20 bis 40 g/m$^2$.

Der Faserstoff ist ein- oder beidseitig mit einem heißsiegelfähigen Kunststoff imprägniert oder beschichtet, welcher der Folie eine ausreichende Wasserdampf- und Rauchdurchlässigkeit verleiht. Dieser Kunststoff ist ein Mischpolymerisat aus mindestens zwei verschiedenen monomeren Einheiten, insbesondere ein Copolymerisat oder Terpolymerisat. Die monomeren Einheiten sind ausgewählt aus der Gruppe der Vinylester wie Vinylacetat, Maleinsäureester, Fumarsäureester, Acrylsäureester, Methacrylsäureester, linearen alpha-Olefinen mit 2 bis 8 C-Atomen, insbesondere Ethylen und Styrol.

In bevorzugter Ausführungsform ist das Mischpolymere aus den folgenden Kombinationen von zwei oder drei monomeren Einheiten aufgebaut:
Vinylacetat/Maleinsäureester
Vinylacetat/Fumarsäureester
Vinylacetat/Acrylsäureester
Vinylacetat/Methacrylsäureester
Vinylacetat/Maleinat/Acrylsäureester
Vinylacetat/Maleinat/Methacrylsäureester
Vinylacetat/Ethylen/Acrylsäureester
Vinylacetat/Ethylen/Methacrylsäureester
Vinylacetat/Ethylen
Styrol/Acrylsäureester
Styrol/Methacrylsäureester

Der Anteil der monomeren Esterkomponente(n) (Maleinsäure-, Fumarsäure-, Acrylsäure-, Methacrylsäureester) ist gewöhnlich kleiner als 70, insbesondere kleiner 50 Gew.-%, bezogen auf das Gesamtgewicht des Mischpolymerisats. Der alkoholische Rest der Ester umfaßt insbesondere aliphatische Alkohole mit 1 bis 12 C-Atomen, bevorzugt 2 bis 8.

Ein besonders geeignetes Mischpolymerisat ist aus Vinylacetat-Einheiten und Maleinsäuredi-n-butylester-Einheiten aufgebaut, wobei der Anteil der Vinylacetat-Einheiten 40 bis 80, insbesondere 50 bis 60 Gew.-%, bezogen auf das Gesamtgewicht des Mischpolymerisats, beträgt. Auch Mischpolymerisate aus Vinylacetat und Ethylen sind besonders vorteilhaft. Der Anteil der Ethylen-Einheiten beträgt im allgemeinen 5 bis 25 Gew.-%.

Außer den genannten monomeren Komponenten enthält das Polymerisat gegebenenfalls auch vernetzende Monomerkomponenten mit einem Anteil von kleiner als 10 Gew.-%, bezogen auf das Gesamtgewicht des Mischpolymerisats, wenn eine besonders hohe Siegelnahtfestigkeit erforderlich ist. Nach der Vernetzung ist die Kunststoffschicht allerdings gegenüber Wasserdampf weniger durchlässig. Es ist deshalb zweckmäßig, die vernetzenden Komponenten nur im Bereich der Naht auf den Faserstoff aufzubringen. Als vernetzungsfähige Monomeren seien genannt: bifunktionelle polymerisationsfähige Monomere, wie Acryl- bzw. Methacrylsäureester von Polyolen, z.B. Äthylenglykoldimethacrylat, Butandioldimethacrylat, Triglykoldimethacrylat, Trimethylolpropantrimethacrylat, Allylverbindungen, z.B. Allylmethacrylat, Triallylcyanurat, Nitrile, Amide, N-Methylolamide, N-Methylolätheramide, insbesondere Acryl- und Methacrylamide und deren N-Methylolverbindungen, N,N'-Methylenbisacrylamid und -methacrylamid.

Weiterhin enthält die Kunststoffschicht gegebenenfalls übliche Verarbeitungshilfsmittel und Additive, z.B. Verdickungsmittel wie Celluloseether, Farbstoffe und Emulgator, z.B. oberflächenaktive Substanzen und Polyvinylalkohol. Im allgemeinen ist ein Haftvermittler nicht erforderlich.

Zur Herstellung der Folie wird der flächenförmige, vorzugsweise bahn-, band- oder blattförmige Faserstoff mit einer wäßrigen Dispersion des Mischpolymeren imprägniert. Gewöhnlich hat die Dispersion einen Feststoffgehalt von 20 bis 60 % (DIN 53 189), das Mischpolymerisat eine mittlere Teilchengröße von 0,1 bis 3 $\mu$m. Die Dispersion kann durch Zugabe eines Verdickungsmittels auf die gewünschte Viskosität eingestellt werden, so daß eine ausreichende Imprägnierung des Faserstoffs gewährleistet ist. Der Auftrag der Dispersion auf den Faserstoff erfolgt ein- oder beidseitig beispielsweise mit einer bei der Beschichtung von Textilien oder Kunststoffolien üblichen Beschichtungsvorrichtung. Geeignete Vorrichtungen sind z.B. schlitzförmige Düsen, Walzen oder Sprühvorrichtungen. Es ist auch möglich, den Faserstoff durch eine Wanne mit der Kunststoffdispersion zu führen. Bei Bedarf kann der Auftrag wiederholt werden, falls eine dickere Beschichtung gewünscht wird. Die Auftragsmenge ist im allgemeinen relativ gering, so daß die Struktur des Faserstoffs durch die Kunststoffschicht hindurch sichtbar bleibt. Jedoch ist es zweckmäßig, daß die Kunststoffschicht einen geschlossenen Filmüberzug auf dem Faserstoff ausbildet. Die maximale Dicke der Kunststoffschicht wird praktisch dadurch festgelegt, daß die Folie für Rauch und Wasserdampf noch ausreichend durchlässig ist, so daß sie als künstliche Wursthülle für Rohwurst geeignet ist. Das Dispersionsmittel wird bei erhöhter Temperatur, vorzugsweise bei 60 bis 90 °C mit einer Trockenvorrichtung, z.B. mit Heizstrahler oder Heißluft, entfernt. Die aufgebrachte Menge an Kunststoff beträgt gewöhnlich 10 bis 60, insbesondere 20 bis 40 g/m². 

Die Herstellung des Schlauchs aus der Folie erfolgt auf übliche Weise durch Falten der bahn- oder bandförmigen Folie um ihre Längsachse, so daß sich ihre längsaxialen Randzonen überlappen.

Es ist auch möglich, die überlappenden oder eine Stoßnaht bildenden Ränder der schlauchförmig gebogenen Folie durch einen Folienstreifen zu verbinden. Die Randbereiche werden miteinander und/oder mit dem Folienstreifen durch Heißsiegelung verbunden. Die Bildung der Schlauchhülle mit einer längsaxial sich erstreckenden Naht durch Verklebung der Randbereiche der zum Schlauch gebogenen Folienbahn miteinander oder dem Folienstreifen erfolgt in an sich bekannter Weise, wie es z.B. in der EP-A-0 058 240 beschrieben wird. Die Formung der bahnförmigen Folie zu einem Schlauch erfolgt beispielsweise entweder auf einer genügend langen Wegstrecke, so daß keine Verzerrungen oder Faltenbildung erfolgt, oder durch Umlenkung über ein schulterartiges Formwerkzeug. Bahnbewegung und Versiegelung der Randzonen können taktweise oder kontinuierlich erfolgen. Der aufgebrachte Kunststoff gestattet eine linien- oder bandförmige Heißsiegelung im Randbereich. Bei der Heißsiegelung wird die auf den Faserstoff aufgebrachte Kunststoffschicht im Überlappungsbereich der Folienränder thermisch aktiviert. Durch Wärmezufuhr beim Siegelvorgang wird die Kunststoffschicht klebrig oder beginnt aufzuschmelzen, beim Abkühlen verfestigt sie sich wieder. Bei Verwendung von vernetzenden Monomerkomponenten im Siegelbereich wird durch die Hitzeeinwirkung die Vernetzung ausgelöst. Dadurch wird eine besonders feste Siegelnaht erreicht. Die Versiegelung erfolgt z.B. durch Kontakt mit einer auf eine bestimmte Temperatur vorgeheizte Siegelbacke oder Siegelrolle. Für die Versiegelung kann jedoch jede andere Wärmequelle in Frage kommen, beispielsweise IR-Strahler, Hochfrequenz-Erwärmung oder Heißluft. Häufig ist es zweckmäßig, zusätzlich Druck auf die Siegelstelle auszuüben, z.B. durch Anpressen einer geheizten Rolle, wobei der Druck auch von der Siegeltemperatur abhängt. Die erfindungsgemäß zu verwendenden Kunststoffe erfordern Siegeltemperaturen im Bereich von 80 bis 170 °C.

Die resultierende Heißsiegelnaht ist ausreichend fest und hält mechanischer Belastung, wie sie beim Einpressen von Wurstmasse auftritt, stand. Die Schläuche zeigen große Festigkeit gegenüber Dehnungsbeanspruchung und Volumenbeständigkeit beim Füllen und Verarbeiten. Mit Wurstbrät gefüllte Schlauchhüllen zeigen nach dem Räuchern eine vollständige und gleichmäßige Räucherfarbe, auch im Bereich der Siegelnaht. Diese vorteilhaften Eigenschaften machen die Folie besonders geeignet zur Herstellung von schlauchförmigen Wursthüllen für Rohwürste.

Es ist auch möglich, die Schlauchbildung in einem Arbeitsgang mit der Herstellung der Würste durchzuführen, indem man die Folie am Füllrohr der Füllvorrichtung zu einer Schlauchhülle formt und die Siegelnaht anbringt und in die Schlauchhülle gleichzeitig Wurstmasse einpreßt.

Die Schlauchhülle zeigt auf ihrer Innen- und/oder Außenseite, d.h. auf der Kunststoffschicht, gegebenenfalls eine bei künstlichen Wursthüllen übliche Beschichtung. z.B. ein fungizides Mittel, ein Mittel zur Erleichterung der Schälbarkeit oder eine sauerstoffundurchlässige Schicht.

Die Erfindung wird anhand der nachfolgenden Beispiele näher erläutert:

Beispiel 1

Ein Hanffaserpapier mit einem Flächengewicht von 16 g/m² wurde kontinuierlich mit einer wäßrigen weichmacherfreien Vinylacetat/Maleinsäuredi-n-butylester-Copolymer-Dispersion (Gewichtsverhältnis der Monomeren 55:45) mit einem Feststoffanteil von 30 % und einem Teilchendurchmesser von 0,3 bis 2,0 Mikrometer getränkt, abgerakelt und anschließend getrocknet. Die erhaltene Folie hatte ein Flächengewicht von 41 g/m² und zeigte in getrocknetem Zustand eine Festigkeit von 23 N/mm² bei einer Dehnung von 18 %. Die Wasserdampfdurchlässigkeit betrug 838 g/m²d (Dicke = 100 μm, DIN 53 122, 23 °C/85 % r.F.).

Das beschichtete Hanffaserpapier wurde auf einer schlauchformenden Siegelanlage mit 40 Takten/min bei 170 °C zu einem Schlauch mit überlappender Längsnaht gesiegelt. Der Schlauchdurchmesser betrug 50 mm. Der Schlauch wurde in Hüllenabschnitten von 30 cm Länge unterteilt, mit Wurstbrät vom Salamityp gefüllt und anschließend 8 Stunden bei einer relativen Feuchte von 60 % ohne Luftbewegung gelagert. Daran schloß sich folgendes Reifeprogramm an:

1. und 2. Tag:
relative Feuchte 92-94 %/22-24 °C
3. bis 28. Tag:
die relative Feuchte wurde jeweils so eingestellt, daß sie 5 % unter dem $a_w$-Wert der Salami liegt. Die Temperatur wurde allmählich abgesenkt und erreichte am 28. Tag 15 °C. Unter $a_w$-Wert versteht man den Wasseraktivitätswert, dieser gibt den Anteil des freien Wassers im Brät an.

Es resultierte eine schnittfeste, durchgereifte Rohwurst.

Beispiel 2

Ein Vliesstoff aus Polyethylenterephthalat-Fasern mit einem Flächengewicht von 25 g/m² wurde mit der Vinylacetat/Maleinat-Copolymerdispersion des Beispiels 1 getränkt, abgerakelt und anschließend bei etwa 80 °C getrocknet. Die erhaltene Folie hatte ein Flächengewicht von 60 g/m² und zeigte in getrocknetem Zustand eine besonders hohe Festigkeit von 30 N/mm² bei einer Dehnung von 15 %.

Die Wasserdampfdurchlässigkeit war größer als 200 g/m²d (Dicke = 80 μm, DIN 53 122, 23 °C/85 % r.F.).

Der beschichtete Vliesstoff wurde auf einer schlauchformenden Siegelanlage bei 160 °C überlappend zu einem Schlauch mit einem Durchmesser von 58 mm gesiegelt. Der erhaltene Schlauch wurde in Hüllenabschnitte von 30 cm Länge unterteilt und mit Salamibrät gefüllt. Die Wurst wurde anhand des in Beispiel 1 aufgeführten Temperatur- und Feuchteprogramms gereift und gelagert.

Wie in Beispiel 1 resultierte eine schnittfeste, durchgereifte Salami.

Beispiel 3

In analoger Weise zu Beispiel 2 wurde eine Folie aus dem dort beschriebenen Vliesstoff und einer wäßrigen weichmacherfreien Copolymerdispersion aus Vinylacetat- und Ethylen-Einheiten (Gewichtsverhältnis 85:15) hergestellt. Die erhaltene Folie hatte ein Flächengewicht von 105 g/m² und zeigte in getrocknetem Zustand eine Festigkeit von 5 N/mm² bei einer Dehnung von 25 %. Die Wasserdampfdurchlässigkeit betrug etwa 100 g/m²d (Dicke = 120 μm, DIN 53 122, 23 °C/85 % r.F.).

Der beschichtete Vliesstoff wurde schlauchförmig gebogen und überlappend bei 80 °C zu einem Schlauch gesiegelt.

In analoger Weise wie in Beispiel 2 hergestellte und gelagerte Rohwürste waren schnittfest und durchgereift.

**Patentansprüche**

1. Kunststoffolie mit einer Verstärkung aus einem Faserstoff, dadurch gekennzeichnet, daß der flächenförmige Faserstoff zumindest auf einer seiner beiden Oberflächen eine Imprägnierung und gegebenenfalls einen Überzug aus einem Kunststoff aufweist, der im wesentlichen aus einem Mischpolymeren mit mindestens zwei verschiedenen monomeren Einheiten besteht, die aus der Gruppe der Vinylester, Maleinsäureester, Fumarsäureester, Acrylsäureester, Methacrylsäureester, linearen alpha-Olefinen mit 2 bis 8 C-Atomen und Styrol ausgewählt sind.

2. Folie nach Anspruch 1, dadurch gekennzeichnet, daß das Mischpolymere zwei oder drei verschiedene monomere Einheiten aufweist.

3. Folie nach Anspruch 1 oder 2, dadurch gekennzeichnet, daß das Mischpolymere aus monomeren Einheiten aufgebaut ist, ausgewählt aus Vinylacetat mit Maleinsäureester oder Fumarsäureester, Vinylacetat mit Acrylsäureester oder Methacrylsäureester, Vinylacetat mit Acrylsäureester oder Methacrylsäureester und Maleinsäureester oder Olefin, insbesondere Ethylen, Vinylacetat mit Olefin, insbesondere Ethylen, sowie Acrylsäureester oder Methacrylsäureester mit Styrol.

4. Folie nach einem der Ansprüche 1 bis 3, dadurch gekennzeichnet, daß der Kunststoff vernetzt ist.

5. Folie nach einem der Ansprüche 1 bis 4, dadurch gekennzeichnet, daß der Faserstoff ein Faserpapier, vorzugsweise aus Hanffasern, insbesondere mit einem Flächengewicht von 15 bis 30 g/m² oder ein Vliesstoff ist, welcher vorzugsweise aus Kunststoffasern, insbesondere aus Polyester wie Polyethylenterephthalatfasern oder Polyolefin wie Polypropylenfasern oder Polyamidfasern wie PA 6- oder PA 66-Fasern oder aus Mischfasern aus Kunststoff, insbesondere aus wenigstens zwei verschiedenen der genannten Kunststoffe besteht, wobei der Vliesstoff ein Flächengewicht von insbesondere 10 bis 50 g/m² aufweist.

6. Folie nach einem der Ansprüche 1 bis 5, dadurch gekennzeichnet, daß sie zu einer zylinderförmigen Schlauchhülle gebogen ist, wobei sich ihre längsaxialen Ränder überlappen und im Überlappungsbereich miteinander unter Ausbildung einer Längsnaht fest verbunden sind.

7. Folie nach einem der Ansprüche 1 bis 6, dadurch gekennzeichnet, daß sie zu einer zylinderförmigen Schlauchhülle gebogen ist, wobei ihre längsaxialen Ränder durch einen beide Ränder überdeckenden Folienstreifen miteinander verbunden sind.

8. Verwendung der Folie nach Anspruch 6 oder 7 als schlauchförmige Verpackungshülle, vorzugsweise Lebensmittelhülle, insbesondere als künstliche Wursthülle.

9. Verfahren zur Herstellung der Folie nach einem der Ansprüche 1 bis 5, dadurch gekennzeichnet, daß der flächenförmige Faserstoff zumindest auf einer Oberfläche mit einer wäßrigen Dispersion des Kunststoffs getränkt und gegebenenfalls beschichtet wird und danach das Dispersionsmittel entfernt wird.

Europäisches
Patentamt

**EUROPÄISCHER
RECHERCHENBERICHT**

Nummer der Anmeldung

**EP 91 10 6036**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 441 558   (NATURIN-WERK BECKER & CO.) <br> * Seite 6, Zeile 4 - Seite 14, Zeile 3; Ansprüche * | 1-5 | A 22 C 13/00 |
| Y | | 1-9 | |
| | – – – | | |
| X | EP-A-0 217 069   (KUREHA KAGAKU KOGYO K.K.) <br> * Insgesamt * | 1-4 | |
| Y | | 1-9 | |
| | – – – | | |
| D,Y | DE-A-3 328 050   (HOECHST AG) <br> * Insgesamt <br> * & EP-A-139 112 | 1-9 | |
| | – – – | | |
| A | DE-A-1 952 464   (TEE-PAK) <br> * Seite 21, Zeile 25 - Seite 22, Zeile 4; Ansprüche * <br> – – – – – | 1-9 | |

| RECHERCHIERTE SACHGEBIETE (Int. Cl.5) |
|---|
| A 22 C |

Der vorliegende Recherchenbericht wurde für alle Patentansprüche erstellt

| Recherchenort | Abschlußdatum der Recherche | Prüfer |
|---|---|---|
| Den Haag | 23 Juli 91 | KAUMANN E.K-H |